(19) Europäisches Patentamt
European Patent Office
Office européen des brevets

(11) EP 2 424 074 A2

(12) EUROPEAN PATENT APPLICATION

(43) Date of publication:
29.02.2012 Bulletin 2012/09

(51) Int Cl.:
H02J 7/35 (2006.01)     G05F 1/67 (2006.01)

(21) Application number: 11176928.7

(22) Date of filing: 09.08.2011

(84) Designated Contracting States:
AL AT BE BG CH CY CZ DE DK EE ES FI FR GB
GR HR HU IE IS IT LI LT LU LV MC MK MT NL NO
PL PT RO RS SE SI SK SM TR
Designated Extension States:
BA ME

(30) Priority: 27.08.2010 US 869945

(71) Applicant: General Electric Company
Schenectady, NY 12345 (US)

(72) Inventors:
• Schelenz, Owen Jannis
Niskayuna, NY New York 12309 (US)
• O'Brien, Kathleen Ann
Niskayuna, NY New York 12309 (US)
• Sabate, Juan Antonio
Niskayuna, NY New York 12309 (US)

(74) Representative: Bedford, Grant Richard
Global Patent Operation - Europe
GE International Inc.
15 John Adam Street
London WC2N 6LU (GB)

(54) **Solar power generation system and method**

(57) A power generation system (210) includes photovoltaic (PV) modules (212) for generating power and power converters (214) coupled to receive power from the PV modules (212). The power generation system (210) further includes converter controllers (222) to control the power converters (214), each converter controller (222) includes a maximum power point tracking control element (221). A master controller (224) in the power generation system (210) is configured to coordinate power outputs of the power converters (214) by controlling the timing and numbers of power converters (214) having power-voltage (P-V) curves sweeping between maximum power points and power points off the maximum power points.

FIG. 3

EP 2 424 074 A2

**Description**

This invention relates generally to electrical energy conversion and, more specifically, to connection of photovoltaic modules to a power grid.

With the rising cost and scarcity of conventional energy sources and concerns about the environment, there is a significant interest in alternative energy sources such as solar power and wind power. Solar power generation uses photovoltaic (PV) modules to generate electricity from the sun. Multiple PV cells are connected electrically to one another in such systems.

In solar power generation systems, in order to feed the electrical power to the power grid, power electronic components are used for power conditioning. In one example, the power electronic components include a direct current (DC) to DC converter and a DC to alternating current (AC) inverter connected back to back through a DC link.

As new grid codes are developed for solar power generation systems, and as market penetration levels of solar power increase, variability of solar power is becoming less acceptable to utility companies. For example, utility companies are imposing or expected to impose requirements related to power ramp rate limits, power curtailment, and frequency stabilization.

Power curtailment refers to the decrease in the output power of a power generation system and typically occurs when there is excess electric power production in an area and insufficient transmission capacity to move that electric power to demand centers. Power curtailment may also be demanded by a utility during certain types of grid disturbances. Frequency stabilization requirements of utilities are achievable when a solar power generation system is able to increase or decrease its output power in response to changes in grid conditions. Storing excess energy in energy storage devices is an option to achieve power curtailment and address frequency stabilization requirements but system costs increase with the use of and size of the storage devices.

Therefore, there is a need for an improved, solar power transmission system to address one or more aforementioned issues.

In accordance with an embodiment of the present invention, a power generation system including photovoltaic (PV) modules for generating power is provided. The system also includes power converters coupled to receive power from the PV modules and converter controllers to control the power converters. Each converter controller includes a maximum power point tracking control element. A master controller is provided in the system to coordinate power outputs of the power converters by controlling the timing and numbers of power converters having power voltage (P-V) curves sweeping between maximum power points and power points off the maximum power points.

In accordance with another embodiment of the present invention, a method of controlling a solar power generation system is provided. The solar power generation system includes PV modules and power converters coupled to the PV modules. The method includes using at least one processor for coordinating power outputs of the power converters by controlling the timing and numbers of power converters having power-voltage (P-V) curves sweeping between maximum power points and power points off the maximum power points.

Various features, aspects, and advantages of the present invention will become better understood when the following detailed description is read with reference to the accompanying drawings in which like characters represent like parts throughout the drawings, wherein:

FIG. 1 is a schematic illustration of a conventional solar power generation system;

FIG. 2 is a graphical representation of a V-I characteristics and a P-V characteristic of a PV module;

FIG. 3 is a diagrammatical representation a solar power generation system in accordance with an embodiment of the present invention;

FIG. 4 is a graphical representation of a V-I curve, a P-V curve and a power waveform of a PV module of the embodiment of FIG. 3;

FIG. 5 is a graphical representation of output power waveforms of DC to DC converters and total output power waveform in accordance with embodiments of the present invention;

FIG. 6 is a graphical representation of another V-I curve, a P-V curve and a power waveform of a PV module in accordance with an embodiment of the present invention; and

FIG. 7 is a diagrammatical representation a solar power generation system in accordance with another embodiment of the present invention.

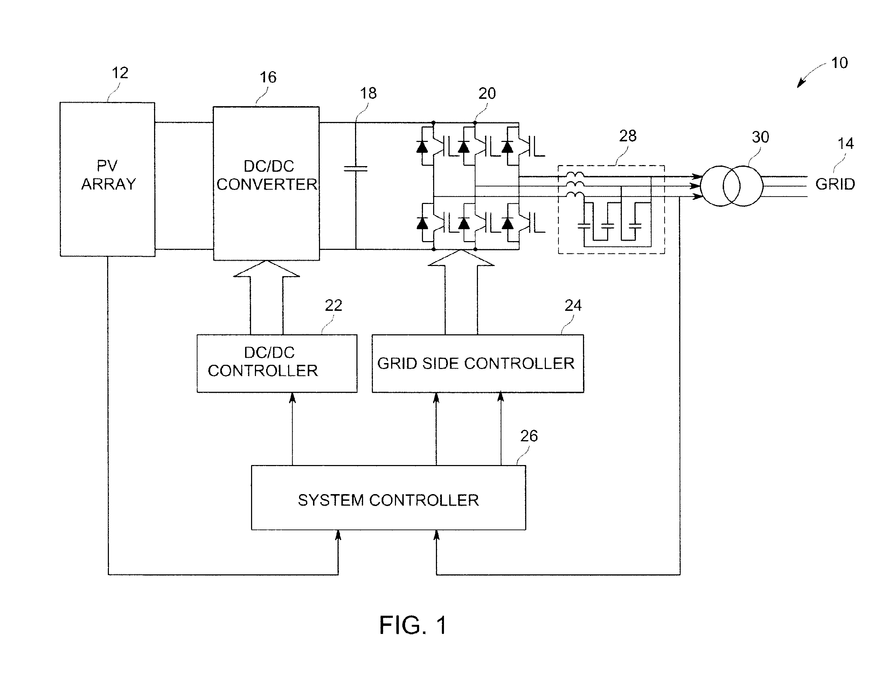

FIG. 1 illustrates a conventional solar power generation system 10. The power generation system includes a PV array 12 including a plurality of connected PV modules. The PV array is connected to a power grid 14 through a DC/DC converter 16, a DC link 18, and a grid side three-phase DC/AC converter 20. In other systems, the grid side three-phase converter may be replaced by multiple single-phase converters. The DC/DC converter 16 is controlled by a DC/DC controller 22 which may comprise a maximum power point tracking (MPPT) controller, and the grid side converter 20 is controlled by a grid side controller 24. A system controller 26 generates a reference DC voltage command, a reference output voltage magnitude command, and a reference frequency command for the DC/DC converter 22 and the grid side converter 20 respectively. In other systems, a single controller may be used for the multiple control functions shown in FIG. 1. Filters 28 are used in the system for removing harmonics from the system output power, and transformer 30 is used for matching grid side converter output voltage to the grid voltage. Power grid 14 may comprise a utility grid or any other system of connecting power generation systems and loads.

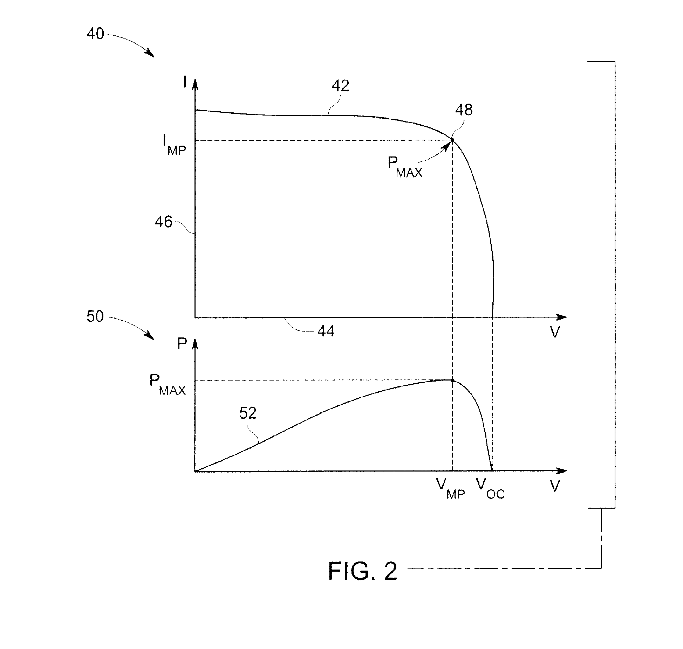

FIG. 2 illustrates a graph 40 of a V-I characteristic 42 of a PV module and a graph 50 of a P-V characteristic 52 of the PV module. Horizontal axis 44 in graph 40 represents a voltage scale in volts, and vertical axis 46 represents a current scale in amperes. PV modules have a single operating point or a maximum power point (MPP) 48 where the values of the current (I) and voltage (V) of the PV module result in a maximum output power $P_{MAX}$. These values correspond to a particular load resistance, which is equal to V/I as specified by Ohm's Law. As can be seen from graph 40, the PV module has an exponential relationship between current and voltage, and the maximum power point occurs at the knee of the curve, where the resistance is equal to the negative of the differential resistance (V/I = -dV/dI). The voltage at maximum power point 48 is represented as $V_{MP}$ and the current is represented as $I_{MP}$. Maximum power point tracking controllers utilize a control circuit or a logic to search for this maximum power point and thus to allow the converter circuit to extract the maximum power available from the PV module. It should be noted that, the V-I characteristics of the PV module varies with the temperature and the insolation. Thus, at a different temperature, maximum power point 48 may be at a different voltage and a different current depending on the V-I characteristic at that temperature. Graph 50 shows corresponding power vs. voltage (P-V) curve 52 for V-I characteristic 42. It can be seen from graph 50 that maximum power $P_{MAX}$ occurs at voltage $V_{MP}$.

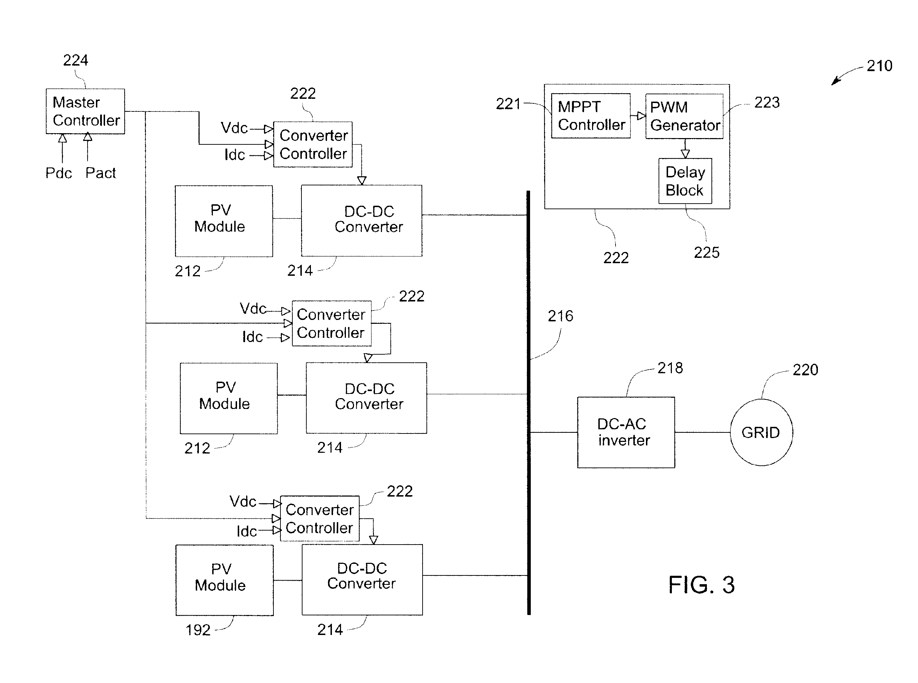

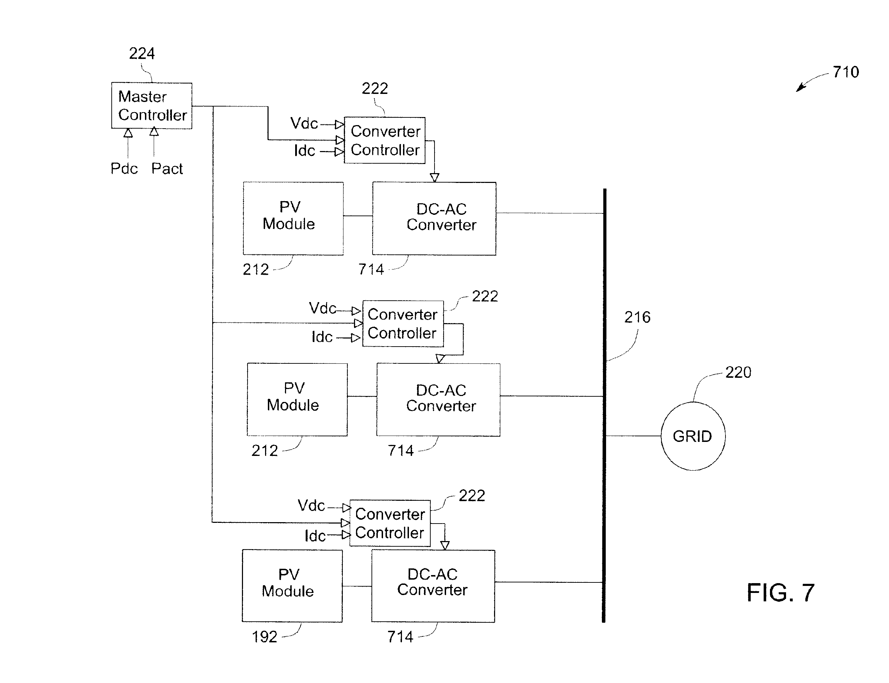

FIG. 3 shows a solar power generation system 210 in accordance with an embodiment of the present invention. Power generation system 210 includes a plurality of PV modules 212 to generate DC power, a plurality of DC to DC converters 214 which provide a controlled DC power to a feeder 216, a plurality of converter controllers 222, and a DC to AC inverter 218 which converts DC power from feeder 216 to AC power and then transmits the AC power to a power grid 220. Each DC to DC converter 214 is connected to at least one respective PV module 212. Although one PV module per DC to DC converter is included in FIG. 3 for purposes of illustration, in some embodiments multiple PV modules may be included in an array to be coupled to a respective DC to DC converter, and the present invention is intended to encompass both embodiments. In one embodiment, there may be a plurality of DC to AC inverters connected to respective ones of the DC to DC converters 214. In yet another embodiment, a plurality of DC to AC inverters may be directly coupled to the plurality of PV modules without any DC to DC converters in between. The control of DC to DC converters described with respect to FIGs. 3 is additionally applicable to the direct coupling embodiment 710 shown in FIG. 7 wherein directly coupled DC to AC inverters 714 are used. Power generation system 210 further includes a master controller 224 to provide control signals to converter controllers 222 to operate the DC to DC converters 214 in an interleaved manner. In many embodiments converter controllers 222 and master controller 224 are housed in separate control units, however, if desired, these controllers may alternatively be integrated into a common control unit.

Converter controller 222 includes a maximum power point tracking (MPPT) controller 221 for PV module 212, a Pulse width modulation (PWM) generator 223 and a delay block 225. As V-I characteristics of PV module 212 varies according to factors such as temperature and cloud cover, MPPT controller 221 continuously tracks a new modified maximum power point on the V-I curve. MPPT controller 221 receives Vdc and Idc as two inputs from PV module 212, wherein Vdc and Idc are the DC voltage and DC current of the PV module. MPPT controller 221 may include any suitable MPPT algorithms with several examples including a perturbation and observation algorithm and an incremental conduction algorithm.

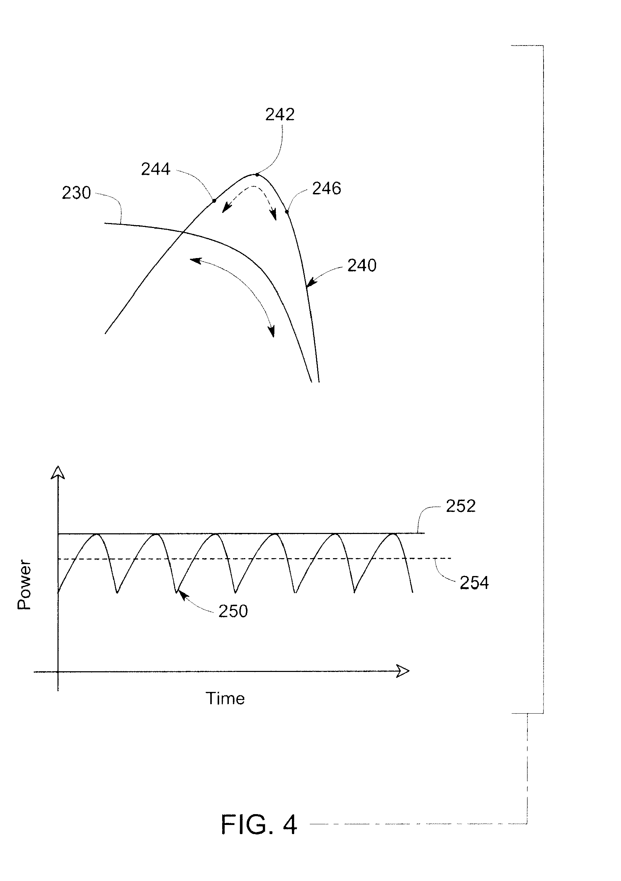

FIG. 4 shows an enlarged view near the maximum power point of a V-I curve 230, a P-V curve 240, and a power waveform 250 of PV module 212 (FIG. 3). As can be seen from the figure, while determining a maximum power (MP) point 242 on P-V curve 240, MPPT controller 221 (FIG. 3) sweeps P-V curve 240 from an off MP point 244 on the left side of MP point 242 to another off MP point 246 on the right side of MP point 242. The corresponding voltage and current drawn from PV module are also varied as shown in V-I curve 230. It should be noted that even though the power waveform 250 appears to be a smooth ripple waveform due to scaling, the ripple waveform will look like a stair case waveform if enlarged. As can be seen from power waveform 250, it has an average value 254 and a MP value 252. In one embodiment, once the maximum power point is determined by MPPT controller 221, the voltage and current are kept constant at that particular value for a particular duration (i.e., a maintenance duration) of time which will depend on the application. Typically the maintenance duration is in the range of several seconds to several minutes. After the maintenance duration, the MPPT algorithm is then again utilized to see if the P-V curve has changed or the maximum power point has shifted to a new location on the curve. It should be noted that, since the MPPT algorithm is continuously (with continuously as used herein meaning either with or without maintenance durations separating sweeps) being run, it is easier to quickly switch to the relevant maximum power point when needed.

The total output power is the addition of all the output powers from the DC to DC converters. Each of the DC to DC converters may operate in a curtailed mode or a normal mode. When operating in a normal mode, a DC to DC converter is either in a maintenance duration and operating at its maximum power point determined by the MPPT algorithm or is in an MPP sweep to redetermine the MPP. When operating in a curtailed mode, the DC to DC converter is operating with a sweep that is typically of a different nature than an MPP sweep. The difference in the nature of the sweep will depend on the type and characteristics of the MPP sweep. In some embodiments, the sweep will be slower in the curtailed mode (almost in a stepping rather than sweeping motion) in order to lower the power output. In some embodiments, the range of the sweep over the curve may be longer in the curtailed mode. The number of DC to DC converters that operate in the curtailed mode as well as the nature of the curtailed sweep may be determined based on the power curtailment requirement from the grid.

To minimize the total overall power ripple, power outputs of curtailed DC to DC converters may be phase shifted. The larger the number of DC to DC converters that are controlled in the curtailed mode, the greater the flexibility for smoothly varying the total output power. To provide for consistent utilization of system components when less than all of the DC to DC converters are curtailed, a supervisory controller may command after a certain period of time that a different set of DC to DC converters to be operated in the curtailed mode and the original set of DC to DC converters return to the normal mode. The transition from the curtailed mode to the normal mode or vice versa may happen within few milliseconds to few seconds, for example, as for a transition from one mode to another mode only the nature or timing of sweeping of the converter needs to be altered.

In another embodiment of the present invention, even in the absence of a curtailment requirement from the grid, the converter sweeps are controlled in a scheduled manner. Even in an embodiment wherein no curtailment is planned or required, there are benefits to staggering the MPP sweeps so as to minimize ripple in the output power. For example, if there are 60 converters each on a schedule for a 1 second MPPT sweep and a one minute MPP maintenance duration between MPP sweeps, in one embodiment, the converters may be controlled so that the 1st converter sweeps during the 1st second of each minute, and the 2nd converter sweeps during the 2nd second of each minute, and so forth.

In another related embodiment wherein self curtailment is used to provide flexibility in the event that the grid requires extra power, scheduling of this self curtailment may be provided. For example, if there are total 1000 converters, then a schedule is determined well before hand as to which converters should operate in the curtailed mode and during what time. The first 200 converters may operate in the curtailed mode from 9 am to 11 am of the day. Then the next 200 converters may operate in the curtailed mode for the next 2 hours, and the first 200 converters will move back in the normal mode. If during a given period of time, the grid requires more power, some or all of the converters operating in a curtailment mode may be switched to a normal operating mode or have the degree of their curtailment reduced. If during a given period of time, curtailment requirements are demanded from the grid, additional converters may be switched from their normal operating mode to a curtailed operating mode.

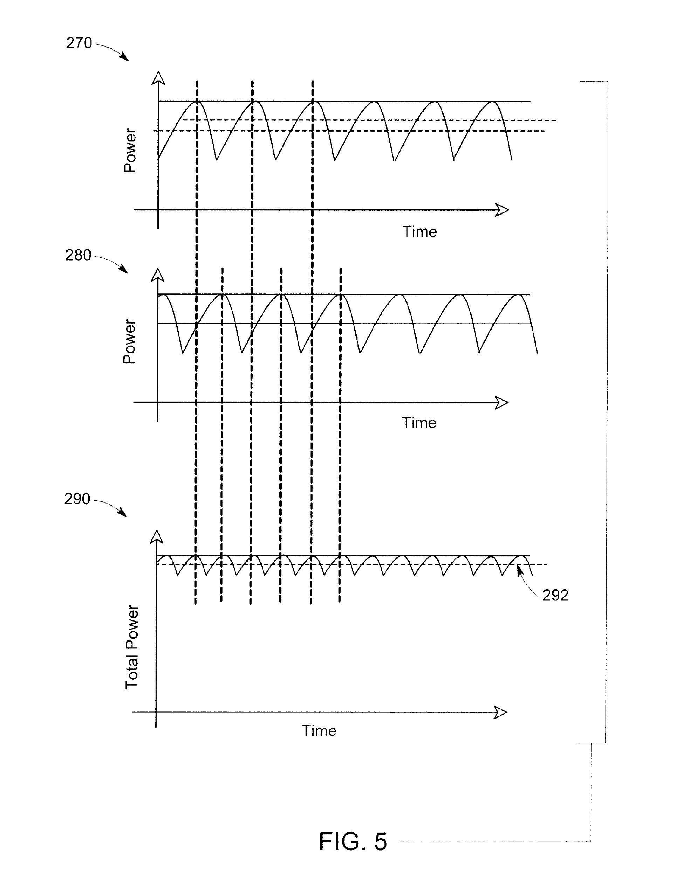

FIG. 5 shows output power waveforms 270, 280 of individual DC to DC converters and a total output power waveform 290 with phase shifted (interleaved) operation of DC to DC converters in accordance with an embodiment of the present invention. As can be seen from FIG. 5, power waveform 280 is phase shifted from power waveform 270 by a delay angle of approximately 180 degrees i.e., PWM waveforms for the second DC to DC converter are phase shifted by 180 degrees compared to the PWM waveforms of the first DC to DC converter. The total output power is the addition of output powers of the two DC to DC converters as shown in waveform 290 and it has an average value shown as 292.

With reference back to FIG. 3, in one embodiment, master controller 224 receives a total output power command Pdc and actual power output Pact as input signals from a supervisory controller (not shown) and a DC to DC converter 214 respectively and generates phase shift angles (or "delay" angles) by which the switching pulses for plurality of DC to DC converters 214 are shifted. Supervisory controller generates the total output power command Pdc based on a grid disturbance or upon excess power being produced by the solar power generation system. In one embodiment, based on the total output power command Pdc, master controller 224 also identifies which of the converters should operate in the curtailed mode and which of the converters should operate in normal mode. Further, master controller 224 may also determine the sweep duration for each of the converters.

During the curtailed mode, the delay angle command provided by master controller 224 will be given by

$$\phi_n = \frac{360 * (n-1)}{N} \qquad (1)$$

where $\phi_n$ is the delay angle command for the $n^{th}$ DC to DC converter, N is the total number of DC to DC converters operating the curtailed mode, and $n$ refers to $n^{th}$ number of the DC to DC converter operating in the curtailed mode. For example, when there are eight DC to DC converters operating in a curtailed mode, PWM pulses for the first DC to DC converter will be shifted by zero degrees, PWM pulses for the second DC to DC converter will be shifted by 45 degrees, PWM pulses for the third DC to DC converter will be shifted by 90 degrees, and so forth. Thus the total output power supplied by the PV modules and respective DC to DC converters will have a reduced effect from the ripple (as illustrated by FIG. 5).

Upon the occurrence of a curtailment request or a grid disturbance, the delay controller will change the delay angle command based on the number of converters to be operated in the curtailed mode. Delay blocks 225 shifts the PWM waveforms of DC to DC converters 214 by the delay angle provided by master controller 224.

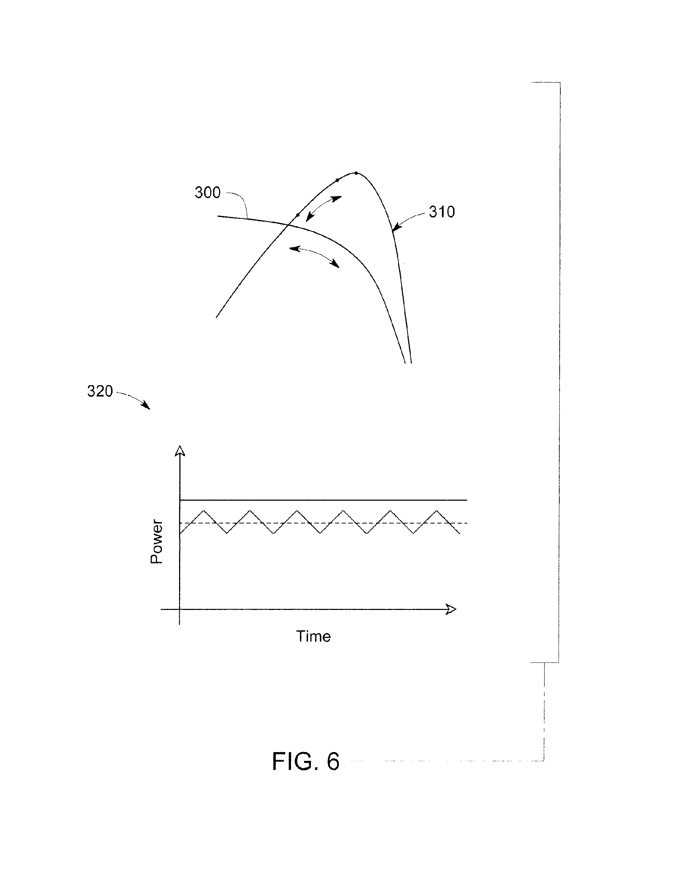

FIG. 6 shows another enlarged view near the maximum power point of a V-I curve 300, a P-V curve 310, and an output power waveform 320 of PV module 192 (FIG. 3). As can be seen from the figure, in one embodiment, MPPT controller 204 (FIG. 3) is configured to sweep on only one side of a MP point 312. Sweeping on only one side of MPP 312 results in a lower power ripple in the output power waveform 320. In one embodiment, sweeping on only one side of MPP 312 is achieved by identifying the maximum power point on the P-V curve and once the maximum power point is identified sweeping the P-V curve only on one side of the maximum power point curve.

While only certain features of the invention have been illustrated and described herein, many modifications and changes will occur to those skilled in the art. It is, therefore, to be understood that the appended claims are intended to cover all such modifications and changes as fall within the true spirit of the invention.

Various aspects and embodiments of the present invention are defined by the following numbered clauses:

1. A power generation system comprising:

   photovoltaic (PV) modules for generating power;

   power converters coupled to receive power from the PV modules;

   converter controllers for controlling the power converters, each converter controller including a maximum power point tracking control element;

   a master controller configured to coordinate power outputs of the power converters by controlling the timing and numbers of power converters having power-voltage (P-V) curves sweeping between maximum power points and power points off the maximum power points.

2. The power generation system of clause 1, wherein the master controller is configured to coordinate curtailment of power outputs from at least two of the power converters.

3. The power generation system of any preceding clause, wherein the master controller is configured to command the converter controllers to operate any remaining power converters at the maximum power point of the respective P-V curves of the remaining power converters.

4. The power generation system of any preceding clause, wherein each converter controller comprises a PWM generator for generating switching pulses for the power converter.

5. The power generation system of any preceding clause, wherein the master controller comprises a delay controller for generating a delay angle command for the at least two of the power converters.

6. The power generation system of any preceding clause, wherein the delay controller generates the delay angle command for each of the at least two of the power converters based on the number of the at least two of the power converters.

7. The power generation system of any preceding clause, wherein each converter controller comprises a delay block to delay switching pulses for the power converters by the respective delay angle.

8. The power generation system of any preceding clause, wherein the at least two of the power converters comprise all of the power converters.

9. The power generation system of any preceding clause, wherein the at least two of the power converters comprise less than all of the Power converters.

10. The power generation system of any preceding clause, wherein the master controller controls over time which of the power converters comprise the at least two of the power converters.

11. The power generation system of any preceding clause, wherein the master controller is further configured to control a sweep duration for P-V curves sweeping.

12. The power generation system of any preceding clause, wherein the power converter comprises a DC to DC converter or a DC to AC converter.

13. A method of controlling a solar power generation system comprising PV modules and power converters coupled to the PV modules, the method comprising:

   using at least one processor for coordinating power outputs of the power converters by controlling the timing and numbers of power converters having power-voltage (P-V) curves sweeping between maximum power points and power points off the maximum power points.

14. The method of any preceding clause, wherein the P-V curves are swept on single sides of the maximum power point.

15. The method of any preceding clause, wherein the P-V curves are swept on both sides of the maximum power point.

16. The method of any preceding clause, wherein coordinating power outputs of the PV modules comprises operating at least two of the power converters in a curtailed mode and any remaining power converters in a normal mode.

17. The method of any preceding clause, wherein operating at least two of the power converters in the curtailed mode comprises phase shifting power output waveforms of the PV modules by a delay angle.

18. The method of any preceding clause, wherein operating power converters in the normal mode comprises operating the power converters at their respective maximum power points.

**Claims**

1. A power generation system (210) comprising:

> photovoltaic (PV) modules (212) for generating power;
> power converters (214) coupled to receive power from the PV modules (212);
> converter controllers (222) for controlling the power converters (214), each converter controller (222) including a maximum power point tracking control element (221);
> a master controller (224) configured to coordinate power outputs of the power converters (214) by controlling the timing and numbers of power converters (214) having power-voltage (P-V) curves sweeping between maximum power points and power points off the maximum power points.

2. The power generation system (210) of claim 1, wherein the master controller (224) is configured to coordinate curtailment of power outputs from at least two of the power converters.

3. The power generation system (210) of any preceding claim, wherein the master controller (224) is configured to command the converter controllers to operate any remaining power converters at the maximum power point of the respective P-V curves of the remaining power converters.

4. The power generation system (210) of any preceding claim, wherein each converter controller (222) comprises a PWM generator (223) for generating switching pulses for the power converter (214).

5. The power generation system (210) of any preceding claim, wherein the at least two of the power converters comprise less than all of the power converters (214).

6. The power generation system (210) of any preceding claim, wherein the master controller (224) controls over time which of the power converters comprise the at least two of the power converters.

7. A method of controlling a solar power generation system (210) comprising PV modules (212) and power converters (214) coupled to the PV modules (212), the method comprising:

> using at least one processor (224) for coordinating power outputs of the power converters by controlling the timing and numbers of power converters (214) having power-voltage (P-V) curves sweeping between maximum power points and power points off the maximum power points.

8. The method of claim 7, wherein the P-V curves are swept on single sides of the maximum power point.

9. The method of claim 7 or claim 8, wherein the P-V curves are swept on both sides of the maximum power point.

10. The method of any one of claims 7 to 9, wherein coordinating power outputs of the PV modules comprises (212) operating at least two of the power converters (214) in a curtailed mode and any remaining power converters in a normal mode.

FIG. 1

FIG. 2

FIG. 3

FIG. 4

270

280

290

292

FIG. 5

300

310

320

Power

Time

FIG. 6

FIG. 7